# EUROPEAN PATENT APPLICATION

(11) **EP 4 794 015 A1**
(43) Date of publication of application: **19.08.2026**
(21) Application number: 26156566.7
(22) Date of filing: 05.02.2026
(51) Int. Cl.: H01M 4/133, H01M 4/134, H01M 4/36, H01M 4/38, H01M 4/587, H01M 4/62

(54) **CARBON COMPOSITE ANODE**

(30) Priority: 14.02.2025 JP 2025021958
(71) Applicant: Toyota Jidosha Kabushiki Kaisha, Toyota-shi, Aichi-ken 471-8571 (JP)
(72) Inventor: OSADA, Naoki, Aichi-ken 471-8571 (JP)
(74) Representative: Kuhnen & Wacker Patent- und Rechtsanwaltsbüro PartG mbB

(57) **Abstract**

An anode configured to decrease the rate of expansion in thickness direction which is due to battery charge and discharge, the anode comprises an anode collector and an anode layer on at least one surface of the anode collector; the anode layer comprises a carbon composite material comprising Si and a carbon material having an aspect ratio of more than 1; the carbon composite material is carbon composite material particles; and wherein, of the carbon composite material particles contained in the anode layer, a percentage of first carbon composite material particles that an angle θ formed by the surface of the anode collector and a line of the carbon composite material particles in long axis direction is 0° or more and less than 45°, is more than 52%.

## Description

### TECHNICAL FIELD

The disclosure relates to an anode.

### BACKGROUND

Various studies have been proposed for anodes as disclosed in Patent Documents 1 to 3.
Patent Document 1: Japanese Patent Application Laid-Open (JP-A) No. 2019-185943
Patent Document 2: Japanese Patent No. 7311169
Patent Document 3: JP-A No. 2016-103337

In the prior art, a battery containing Si as an anode active material has the following problem: the anode containing the Si is deformed by virtue of the expansion and contraction of the Si which is due to charge and discharge of the battery, and the charge and discharge capacity of the Si-containing battery is decreased, accordingly.

### SUMMARY

The present disclosure was achieved in light of the above circumstances. An object of the present disclosure is to provide an anode configured to decrease the rate of expansion in thickness direction which is due to battery charge and discharge.

The present disclosure includes the following embodiments.
<1> An anode comprising an anode collector and an anode layer on at least one surface of the anode collector,
   wherein the anode layer comprises a carbon composite material comprising Si and a carbon material having an aspect ratio of more than 1;
   wherein the carbon composite material is carbon composite material particles; and
   wherein, of the carbon composite material particles contained in the anode layer, a percentage of first carbon composite material particles that an angle θ formed by the surface of the anode collector and a line of the carbon composite material particles in long axis direction is 0° or more and less than 45°, is more than 52%.
<2> The anode according to the above <1>, wherein, of the carbon composite material particles contained in the anode layer, a percentage of second carbon composite material particles that an angle θ formed by the surface of the anode collector and a line of the carbon composite material particles in long axis direction is 0° or more and 20° or less, is more than 31%.
<3> The anode according to the above <1> or <2>, wherein a content of the Si in the carbon composite material is from 1% by mass to 70% by mass.
<4> The anode according to any one of the above <1> to <3>, wherein the carbon material is a composite comprising a bundle of carbon fibers having pores.
<5> The anode according to the above <4>, wherein the Si is loaded in the pores.
<6> The anode according to any one of the above <1> to <4>, wherein the anode layer is disposed in a stripe form on at least one surface of the anode collector.

According to the present disclosure, an anode configured to decrease the rate of expansion in thickness direction which is due to battery charge and discharge, can be provided.

### BRIEF DESCRIPTION OF THE DRAWINGS

In the accompanying drawings,
FIG. 1 is a schematic view of an example of the anode of the present disclosure;
FIG. 2 is a schematic view of an example of the method for producing the carbon composite material of the present disclosure; and
FIG. 3 is a graph showing the rates of the expansion of the anode layers of Example 1 and Comparative Example 1 in the thickness direction.

### DETAILED DESCRIPTION

Hereinafter, the embodiments of the present disclosure will be described in detail. Matters that are required to implement the present disclosure (such as common structures and production processes of anodes not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.

In addition, dimensional relations (such as length, width and thickness) in the drawings do not reflect actual dimensional relations.

In the disclosed embodiments, an example of the method for calculating the average particle diameter of particles is as follows. First, for a particle shown in an image taken at an appropriate magnification (e.g., 50,000x to 1,000,000x) with a scanning electron microscope (hereinafter referred to as SEM), the diameter when the particle is considered spherical, is calculated. Such a particle diameter calculation by SEM observation is carried out on 2 to 300 particles of the same type, and the average of the diameters of the particles is determined as the average particle diameter.

According to the present disclosure, provided is an anode comprising an anode collector and an anode layer on at least one surface of the anode collector,
wherein the anode layer comprises a carbon composite material comprising Si and a carbon material having an aspect ratio of more than 1;
wherein the carbon composite material is carbon composite material particles; and
wherein, of the carbon composite material particles contained in the anode layer, a percentage of first carbon composite material particles that an angle θ formed by the surface of the anode collector and a line of the carbon composite material particles in long axis direction is 0° or more and less than 45°, is more than 52%.

According to the present disclosure, a desired number of electron conducting paths can be retained by combining the Si and the carbon material. In addition, since the carbon material has an aspect ratio of more than 1, the expansion direction of the Si is limited. In addition, in the carbon composite material of the present disclosure, since the Si is continuously disposed in the long axis direction of the particles, the Si is likely to stretch in the long axis direction during battery charge. In addition, since the long axis of the carbon composite material particles is oriented in the planar direction so that the angle formed by the surface of the anode collector and the line of the carbon composite material particles in the long axis direction is 0° or more and less than 45°, the expansion direction of the Si can be controlled in the planar direction, and the expansion of the anode layer in the thickness direction can be suppressed compared to conventional Si-based active materials. By suppressing the expansion of the anode layer in the thickness direction, the thickness of the anode layer can be controlled to be small, and the density of the anode layer can be increased.

The expansion in the planar direction still may increase; however, it can be moderated by forming predetermined grooves between a plurality of the anode layers by disposing the anode layers at predetermined intervals in the stripe form on the anode collector. The grooves can not only make an expansion buffering effect, but also can retain and send an electrolytic solution and obtain a desired number of lithium ion conducting paths.

The anode of the present disclosure comprises the anode collector and the anode layer on at least one surface of the anode collector.

The anode layer is only required to be disposed on at least one surface of the anode collector, or it may be disposed on both surfaces of the anode collector. The anode may have a multi-layered structure by forming two or more anode layers on at least one surface of the anode collector. In the case of forming two or more anode layers, the anode active materials contained in the anode layers may be the same type of anode active material, or they may be different types of anode active materials.

The anode layer may be disposed in a stripe form on at least one surface of the anode collector. That is, the anode may have a plurality of the anode layers in a stripe form on at least one surface of the anode collector, or the anode may have grooves between the adjacent anode layers. The expansion of the anode layers in the planar direction can be moderated by forming predetermined grooves between the adjacent anode layers by disposing the anode layers at predetermined intervals in the stripe form on the anode collector. The size of the predetermined intervals is not particularly limited. The size of the predetermined grooves is not particularly limited, and when the anode has a plurality of the grooves, the grooves may have the same width or different widths.

As the method for disposing the anode layers on the anode collector in the stripe form, examples include, but are not limited to, the following methods: a method in which the anode layers are disposed in the stripe form by forming the anode layer on one surface of the anode collector and then burning off a part of the anode layer with laser so as to form the anode layers and the grooves in the stripe form, and a method in which the anode layers are disposed in the stripe form by masking the anode collector in the stripe form, forming the anode layer on the masked anode collector and then removing the mask from the anode collector.

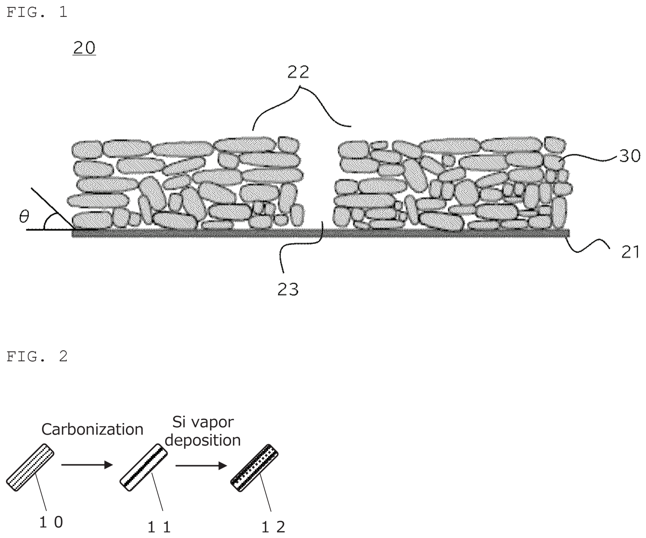

FIG. 1 is a schematic view of an example of the anode of the present disclosure.

In an anode 20 shown in FIG. 1, anode layers 22 containing carbon composite material particles 30 are disposed on one surface of an anode collector 21 at a predetermined interval, and a groove 23 is formed between the adjacent anode layers 22.

The anode layer of the present disclosure contains the carbon composite material as the anode active material. As needed, the anode layer may contain at least one selected from the group consisting of an electroconductive material and a binder.

As the anode active material, the anode layer contains at least the carbon composite material of the present disclosure. As needed, it further contains an anode active material other than the carbon composite material. As the anode active material other than the carbon composite material, an active material that is known as an anode active material for batteries can be used. For example, a carbon material described below can be used.

Of 100% by mass of the anode active material contained in the anode layer, the percentage of the carbon composite material may be 10% by mass or more, may be 20% by mass or more, may be 50% by mass or more, or may be 100% by mass or less.

As the electroconductive material and binder used in the anode layer, examples include, but are not limited to, those that will be exemplified below as the electroconductive material and binder used in a cathode layer.

The percentage of the electroconductive material in the anode layer may be 0.1% by mass or more and 5% by mass or less, for example.

The percentage of the binder in the anode layer may be 0.5% by mass or more and 15% by mass or less, for example.

The content of the anode active material in the anode layer of the present disclosure may be 50% by mass or more, may be 100% by mass or less, may be 90% by mass or less, or may be 74.5% by mass or less.

The carbon composite material is carbon composite material particles.

Of the carbon composite material particles contained in the anode layer, the percentage of the first carbon composite material particles that the angle θ formed by the surface of the anode collector and the line of the carbon composite material particles in the long axis direction is 0° or more and less than 45°, is only required to be more than 52%, and it may be 82% or more.

Of the carbon composite material particles contained in the anode layer, the percentage of the second carbon composite material particles that the angle θ formed by the surface of the anode collector and the line of the carbon composite material particles in the long axis direction is 0° or more and 20° or less, is only required to be more than 31%, and it may be 72% or more.

The angle θ formed by the surface of the anode collector and the line of the carbon composite material particles in the long axis direction, is the orientation degree of the carbon composite material particles in the anode layer. The angle can be calculated by use of a cross-sectional image of the anode obtained by SEM, X-ray CT or the like.

In the present disclosure, the orientation degree of the particles is determined as follows. First, from the particles shown in the field of view of the cross-sectional image of the anode, 30 to 100 particles are separately extracted and used for elliptical approximation. The long and short axes of each particle are extracted, and the anode collector is determined as a horizontal plane. Of the angles formed by the meeting of the long axis of each particle and the horizontal plane, the degree of a minor (acute) angle is measured. The measured degree is considered as the inclination angle θ of the particle, thereby determining the orientation degree of the particle.

The orientation degree of the carbon composite material particles in the anode layer can be controlled as follows. In the production of the anode, an anode paste is applied onto the anode collector. Before the applied anode paste is dried to form the anode layer, a predetermined magnetic field is applied thereto for a predetermined period of time, thereby controlling the orientation degree. The predetermined period of time may be from one second to one hour, for example. The predetermined magnetic field may be from 0.1 T to 5 T, or it may be from 1 T to 3 T, for example.

The carbon composite material contains the Si and the carbon material.

The content of the Si in the carbon composite material (i.e., the amount of the Si loaded on the carbon material) may be 1% by mass or more, may be 10% by mass or more, may be 47% by mass or more, may be 70% by mass or less, may be 50% by mass or less, or may be 49% by mass or less, for example. The content of the Si in the carbon composite material can be calculated by the following formula. $\begin{matrix}Si content \left(%\right) \\ = Mass of the Si / \left(\begin{matrix}Mass of the carbon material + Mass of \\ the Si\end{matrix}\right) \times 100\end{matrix}$

The outermost surface of the carbon composite material may be coated with the carbon material.

The aspect ratio of the carbon material is only required to be more than 1. The aspect ratio may be 1.5 or more, may be 2 or more, may be 2.2 or more, or may be 2.7 or more. The upper limit of the aspect ratio is not particularly limited, and it may be 9.2 or less, may be 7.5 or less, or may be 4.2 or less.

The aspect ratio is obtained as follows: a SEM image of the section or surface of an electrode layer containing the carbon material or the carbon material in a powdery form is taken; from the particles shown in the image, 30 to 100 particles are extracted, and the average value of the aspect ratios of the 30 to 100 particles is calculated by image analysis; and the average value is determined as the aspect ratio of the carbon material. The aspect ratio is represented by the ratio of a/b where a is the long axis direction length of the carbon material and b is the short axis direction length thereof. When the carbon material has a thickness direction (e.g., a flake form), the thickness of the carbon material is determined as the short axis direction length b.

The aspect ratio of the carbon composite material may be the same as the aspect ratio of the carbon material. The aspect ratio of the carbon material may be considered as the aspect ratio of the carbon composite material.

The long axis direction length of the carbon material may be 0.1 µm or more, may be 1 µm or more, may be 5.6 µm or more, may be 10.6 µm or more, may be 100 µm or less, may be 20 µm or less, or may be 18.2 µm or less, for example.

The long axis direction length of the carbon composite material may be the same as the long axis direction length of the carbon material. The long axis direction length of the carbon material may be considered as the long axis direction length of the carbon composite material.

As the carbon material, examples include, but are not limited to, natural graphite, artificial graphite, activated carbon, carbon fibers, mesocarbon microbeads (MCMB), hard carbon and soft carbon.

The form of the carbon material is not particularly limited. The carbon material may be in a particulate form, a flake form, a plate form, a fiber form or the like. The carbon material may be carbon particles, carbon fibers or the like.

The carbon fibers may be obtained by carbonizing a carbon fibers raw material such as polyacrylonitrile (PAN) resin fiber and cellulose nanofiber. The carbonization condition may be heat-treatment of the carbon fibers raw material in an inert gas atmosphere at 1000°C to 1500°C.

Also, the carbon fibers may be a carbon material having a mesoporous structure, such as ordered mesoporous carbon (CMK-3). As the carbon fibers, carbon nanofiber, carbon nanotube or the like may be used.

The carbon material may be a composite comprising a bundle of carbon fibers. Since it is such a composite, the expansion direction of the Si is more limited, and allowing the Si to be in an amorphous form, which is due to its expansion and contraction, is more suppressed.

The carbon fibers may have at least one pore, or it may have pores.

The pores of the carbon fibers may be sequentially aligned in the long axis direction.

The pore diameter of the pores of the carbon fibers may be from 1 nm to 20 nm, for example.

The short axis direction length (width) of the carbon fibers may be from 0.1 µm to 3 µm, for example.

The long axis direction length of the carbon fibers may be, for example, 0.1 µm or more, may be 1 µm or more, may be 5.6 µm or more, may be 10.6 µm or more, may be 100 µm or less, may be 20 µm or less, or may be 18.2 µm or less.

The composite comprising the bundle of the carbon fibers can be obtained by utilizing, for example, aggregation in a poor solvent environment. For example, it is estimated that when the carbon fibers are reacted by strongly stirring them in a xylene solvent as the poor solvent, the carbon fibers aggregate by the action of functional groups (such as a -COOR group) present on the surface of the carbon fibers. A dispersion thus obtained is passed through a slit and quickly dried, thereby obtaining the composite comprising the bundle of the carbon fibers. As needed, the obtained composite may be cut or pulverized by mechanical milling or the like.

The Si may be amorphous or crystalline.

When the Si is crystalline, the crystallite size of the Si, which is measured by X-ray diffraction (XRD), may be from 1 nm to 1 µm.

The Si may be loaded on the surface of the carbon material. When the carbon material is the carbon fibers, the Si may be loaded on the surface of the carbon fibers and/or in the pores of the carbon fibers. After loading the Si on and/or in the carbon material, the surface of the Si may be coated with the carbon material.

The method for loading the Si on and/or in the carbon material is not particularly limited. As the loading method, examples include, but are not limited to, the following methods: chemical vapor deposition (CVD), immersion of the carbon material in a silicon melt, and formation of a silicon layer on and/or in the carbon material by using tetraethyl orthosilicate (TEOS).

As the CVD, examples include, but are not limited to, thermal CVD (chemical vapor deposition using thermal decomposition), PECVD (chemical vapor deposition using plasma or plasma-enhanced chemical vapor deposition) and ALD (atomic layer deposition). The use of thermal CVD is advantageous in that amorphous Si can be uniformly formed.

As the Si source used in the CVD, examples include, but are not limited to, silane (SiH₄) and halogenated silane (H₄₋ₓSiClₓ).

The components of the Si in the carbon composite material can be detected by inductively-coupled plasma (ICP) spectroscopy or a quantitative analysis method using an electron probe microanalyzer (EPMA) or the like.

The carbon composite material may be produced by loading silicon on a substrate comprising the carbon material.

FIG. 2 is a schematic view showing an example of the method for producing the carbon composite material of the present disclosure.

As shown in FIG. 2, a carbon composite material 12 may be produced as follows: a carbon fibers raw material 10 is carbonized to form carbon fibers 11, in each of which pores are aligned in the longitudinal direction, and Si is vapor-deposited in the pores of the carbon fibers 11, thereby producing the carbon composite material 12.

As the material for the anode collector, examples include, but are not limited to, SUS, aluminum, copper, nickel, iron, titanium and carbon. The thickness of the anode collector varies depending on the form. For example, the thickness may be in a range of from 1 µm to 50 µm. The form of the anode collector may be a foil form, a plate form or the like. The plan view shape of the anode collector is not particularly limited. As the shape, examples include, but are not limited to, a circular shape, an elliptical shape, a rectangular shape and any polygonal shape. The structure of the anode collector may be such that a buffer layer, an elastic layer or a PTC thermistor layer is disposed on the surface.

The anode of the present disclosure is used in batteries.

A battery includes a cathode, an electrolyte layer and an anode.

According to the present disclosure, the use of the above-described anode in batteries can suppress battery expansion.

### [Cathode]

The cathode includes the cathode layer. As needed, it further includes a cathode collector.

The cathode layer may be disposed on one surface of the cathode collector, or it may be disposed on both surfaces of the cathode collector. The cathode may have a multi-layered structure by forming two or more cathode layers on at least one surface of the cathode collector. In the case of forming two or more cathode layers, the cathode active materials contained in the cathode layers may be the same type of cathode active material, or they may be different types of cathode active materials.

The cathode layer is a layer which contains at least a cathode active material. As needed, the cathode layer may contain at least one selected from the group consisting of an electroconductive material and a binder.

As the cathode active material, examples include, but are not limited to, an oxide active material. As the oxide active material, examples include, but are not limited to, a layered rock salt-type active material such as LiCoO₂, LiMnO₂, LiNiO₂, LiVO₂, LiNi_{1/3}Co_{1/3}Mn_{1/3}O₂ and LiNi_{0.8}Mn_{0.1}Co_{0.1}O₂, a spinel-type active material such as LiMn₂O₄, Li₄Ti₅O₁₂ and Li (Ni_{0.5}Mn_{1.5}) O₄, and an olivine-type active material such as LiFePO₄, LiMnPO₄, LiNiPO₄ and LiCoPO₄.

The cathode active material is generally in a particulate form. The cathode active material may be primary particles, or it may be secondary particles (aggregated primary particles).

The average particle diameter of the cathode active material is not particularly limited. For example, the average particle diameter is 0.01 µm or more and 50 µm or less, or it may be 0.5 µm or more and 30 µm or less.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF) .

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 µm or more and 1000 µm or less, for example. The thickness of the cathode layer may be 1 µm or more and 500 µm or less, or it may be 30 µm or more and 200 µm or less.

The method for producing the cathode layer is not particularly limited. For example, the production method may be a method including the steps of obtaining a cathode slurry by mixing the cathode active material and a solvent, applying the cathode slurry to a cathode collector and drying the applied slurry, thereby forming the cathode layer. To form the cathode layer, a press treatment (pressing the cathode layer in the thickness direction) may be performed. As the press treatment, examples include, but are not limited to, roller press and plate press.

As the solvent, examples include, but are not limited to, N-methylpyrrolidone (NMP), tetralin, diisobutyl ketone, butyl butyrate, mesitylene, heptane, dibutyl ether, decane, dodecane, isodecane and toluene. The solvent may contain two or more selected from these components.

As the material for the cathode collector, examples include, but are not limited to, SUS, Cr, Au, Pt, Zn, aluminum, copper, nickel, iron, titanium and carbon. The thickness of the cathode collector is 0.1 µm or more and 100 µm or less, for example. The form of the cathode collector may be a foil form, a plate form or the like. The plan view shape of the cathode collector is not particularly limited. As the shape, examples include, but are not limited to, a circular shape, an elliptical shape, a rectangular shape and any polygonal shape. The structure of the cathode collector may be such that a buffer layer, an elastic layer or a positive temperature coefficient (PTC) thermistor layer is disposed on the surface.

### [Electrolyte layer]

The electrolyte layer is a layer formed between the cathode layer and the anode layer, and it contains at least an electrolyte. The electrolyte may be a liquid electrolyte (an electrolytic solution).

The electrolyte layer may contain an electrolytic solution and so on.

As the electrolytic solution, a non-aqueous electrolytic solution or the like can be used.

As the non-aqueous electrolytic solution, one containing a lithium salt and a non-aqueous solvent is generally used.

As the lithium salt, examples include, but are not limited to, an inorganic lithium salt such as LiPF₆, LiBF₄, LiClO₄ and LiAsF₆, and an organic lithium salt such as LiCF₃SO₃, LiN(SO₂CF₃)₂(Li-TFSI), LiN(SO₂C₂F₅)₂ and LiC(SO₂CF₃)₃.

As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), γ-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.

The concentration of the lithium salt in the non-aqueous electrolytic solution may be from 0.3 M to 5 M, for example.

As the electrolyte layer, a separator which is impregnated with the above-mentioned electrolytic solution and is configured to prevent contact between the cathode layer and the anode layer, may be used.

The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric or a glass fiber non-woven fabric.

The thickness of the electrolyte layer is 0.1 µm or more and 100 µm or less, for example. The thickness of the electrolyte layer may be 0.1 µm or more and 500 µm or less, or it may be 0.1 µm or more and 30 µm or less.

In the present disclosure, the battery may further include a fixing jig for applying a fixing pressure to the cathode layer, the electrolyte layer and the anode layer along the thickness direction. The fixing pressure is 0.1 MPa or more, for example. It may be 1 MPa or more, or it may be 5 MPa or more. On the other hand, the fixing pressure is 100 MPa or less, for example. It may be 50 MPa or less, or it may be 20 MPa or less.

### [Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution. The liquid battery may be a non-aqueous liquid battery in which the electrolyte layer contains a non-aqueous liquid electrolyte. In the present disclosure, the battery may be a primary battery or a secondary battery. Among them, it may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

When the battery is a cell stack consisting of stacked cells, the cell stack may be a monopolar cell stack or a bipolar cell stack.

As the applications of the battery, examples include, but are not limited to, the power sources of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as an information processing device.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

### EXAMPLES

### (Example 1)

### [Preparation of carbon fibers]

As a carbon fibers raw material, PAN resin fibers were carbonized by heat-treatment in an inert gas (Ar gas) atmosphere at 1500°C, thereby preparing carbon fibers having pores.

The aspect ratio of the carbon fibers was 2.7. The long axis direction length of the carbon fibers was 5.6 µm.

### [Production of a composite comprising a bundle of the carbon fibers]

Using the carbon fibers, a composite comprising a bundle of the carbon fibers was produced by the following method. The carbon fibers were stirred in a xylene solvent as a poor solvent. A dispersion thus obtained was passed through a slit and quickly dried, thereby obtaining a composite comprising a bundle of the carbon fibers. The obtained composite was used as a carbon material.

### [Production of carbon composite material]

Silicon was loaded on and in the carbon material as follows by thermal CVD.

The carbon material was placed in a chamber. While supplying a gas flow into the chamber, which served as a Si source, a temperature required for thermal decomposition (700°C) was applied to the carbon material. Accordingly, Si particles were loaded on the surface of and in the pores of the carbon material, thereby obtaining carbon composite material particles (silicon-carbon composite material particles). The components of the loaded Si were found out by ICP spectrometry. The content of the Si in the carbon composite material was 48%. The crystallite size of the Si was measured by XRD. As a result, the crystallite size was equal to or less than the lower detection limit, and the Si was amorphous.

### [Production of anode]

The carbon composite material particles (as the anode active material), polyimide (as the binder) and carbon nanotube (as the electroconductive material) were used and mixed at a mass ratio of 74.5:15:0.5 (unit: %) to obtain a mixture. N-methylpyrrolidone (as the solvent) was added to the obtained mixture. Then, these materials were sufficiently mixed by a mixer, thereby obtaining an anode paste. The anode paste was applied onto a copper foil (as the anode collector) by a doctor blade. Then, a magnetic field of 3 T was applied to the applied anode paste for a predetermined period of time. Then, the anode paste was dried at 120°C for 15 minutes to absolutely vaporize the solvent, thereby obtaining an anode which an anode layer was formed on the anode collector. The obtained anode was placed in a closed muffle furnace. After several vacuum purges, the anode was sintered at 450°C for 20 hours in an inert gas (Ar gas) atmosphere, thereby imidizing the binder. In addition, the obtained anode was pressed by a biaxial roll press machine so that the density of the anode layer was 1.42 g/cm³.

### [Formation of grooves in anode]

Parts of the anode layer of the obtained anode were removed by irradiation of desired positions of the anode layer with laser so that a plurality of the anode layers were disposed in a stripe form. Accordingly, the anode in which a plurality of the anode layers were disposed in the stripe form on the anode collector and which had grooves between the adjacent anode layers, was obtained.

### [Production of cathode]

A transition metal oxide LiNi_{0.8}Mn_{0.1}Co_{0.1}O₂ was used as the cathode active material. The cathode active material, the electroconductive material (acetylene black) and the binder (polyvinylidene fluoride) were mixed at a mass ratio of 95:2.5:2.5 (unit: %) to obtain a mixture. As a solvent, N-methylpyrrolidone was added to the obtained mixture. These materials were sufficiently mixed by a mixer, thereby obtaining a cathode paste. The cathode paste was applied onto an aluminum foil (as the cathode collector) by a doctor blade. The applied cathode paste was dried in an environment at 80°C for 15 minutes, thereby producing a cathode which a cathode layer was formed on the cathode collector. The produced cathode was pressed by a biaxial roll press machine so that the density of the cathode layer was 3.2 g/cm³. The capacity ratio of the cathode layer to the anode layer was adjusted so that the cathode capacity/anode capacity ratio was 1.1.

### [Separator]

As the separator, a polyethylene separator was used.

### [Electrolytic solution]

As the electrolytic solution, a solution prepared by adding, to a carbonate-based solvent in which a lithium salt (lithium hexafluorophosphate (LiPF₆)) was contained at a concentration of 1 M, 10% by volume of fluoroethylene carbonate (FEC) and 2% by volume of vinylene carbonate (VC) with respect to 100% by volume (the total volume) of the solvent in the electrolytic solution, was used. The separator was impregnated with the electrolytic solution.

### [Production of battery]

The produced cathode and anode were cut with a predetermined area, and the separator impregnated with the electrolytic solution was disposed therebetween. A stack thus obtained was coated with a laminate film, thereby producing an electrochemical cell (a battery).

### (Comparative Example 1)

A battery was produced in the same manner as Example 1, except for the following: in "Production of anode", the magnetic field was not applied to the anode paste, and the obtained anode was pressed by a biaxial roll press machine so that the density of the anode layer was 1.12 g/cm³.

### [Determination of orientation degree in anode]

The orientation degree of the carbon composite material particles in each of the anodes produced in Example 1 and Comparative Example 1, was calculated by use of a SEM image of a cross-section of the anode.

The percentage of the first carbon composite material particles that the angle θ formed by the surface of the anode collector and the line of the carbon composite material particles in the long axis direction was 0° or more and less than 45°, was calculated.

The percentage of the second carbon composite material particles that the angle θ formed by the surface of the anode collector and the line of the carbon composite material particles in the long axis direction was 0° or more and 20° or less, was calculated. The results are shown in Table 1.

### [Evaluation of anode layer expansion rate]

Using a contact displacement meter, the expansion and contraction behavior of the batteries produced in Example 1 and Comparative Example 1, which was due to battery charge and discharge, was evaluated.

The batteries were charged as follows. At a constant current, 0.3 C (C: hour rate capacity) was applied to each battery. After the battery voltage reached 4.2 V, the battery was charged by applying a constant voltage thereto until the current value became 0.01 C.

The batteries were discharged as follows. At a constant current, 0.3 C was applied to each battery. The battery was discharged until the battery voltage reached 2.5 V.

A pause for 10 minutes was provided between the charge and the discharge.

The anode layer expansion rate of each battery was calculated by the following formula. The results are shown in Table 1. $\begin{matrix}Anode layer expansion rate \left(%\right) \\ = \left(\begin{matrix}Anode layer thickness during battery charge - Anode \\ layer thickness during battery discharge\end{matrix}\right) / Anode layer \\ thickness during battery discharge \times 100\end{matrix}$

**[Table 1]**

| | Percentage (%) of the carbon composite material particles that the formed angle was less than 45° | Percentage (%) of the carbon composite material particles that the formed angle was 20° or less | Anode layer density (g/cm³) | Anode layer expansion rate (%) |
|---|---|---|---|---|
| Example 1 | 82 | 72 | 1.42 | 9 |
| Comparative Example 1 | 52 | 31 | 1.12 | 19 |

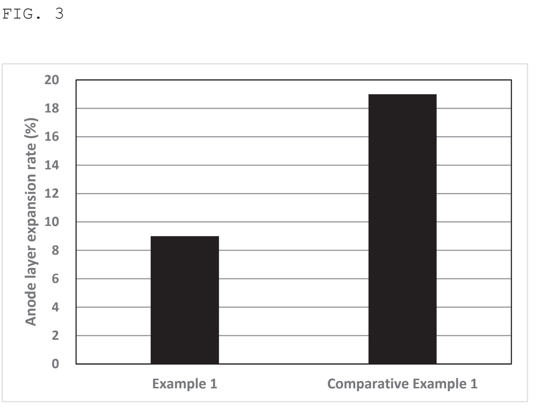

FIG. 3 is a graph showing the anode layer expansion rates of Example 1 and Comparative Example 1.

As for the anode of Comparative Example 1, the rate of the expansion of the anode layer in the thickness direction is 18% or more. According to the anode of Example 1, the rate of the expansion of the anode layer in the thickness direction can be limited to 10% or less by limiting the expansion in the thickness direction. This is the same level as the case where, when the total amount of the anode active material in the anode layer is 100% by mass, a mixture containing 80% by mass of graphite and 20% by mass of the carbon composite material is used as the anode active material.

### REFERENCE SIGNS LIST

10. Carbon fiber raw material
11. Carbon fiber
12. Carbon composite material
20. Anode
21. Anode collector
22. Anode layer
23. Groove
30. Carbon composite material particles

## Claims

1. An anode (20) comprising an anode collector (21) and an anode layer (22) on at least one surface of the anode collector (21),
wherein the anode layer (22) comprises a carbon composite material (12) comprising Si and a carbon material having an aspect ratio of more than 1;
wherein the carbon composite material (12) is carbon composite material particles (30); and
wherein, of the carbon composite material particles (30) contained in the anode layer (22), a percentage of first carbon composite material particles that an angle θ formed by the surface of the anode collector (21) and a line of the carbon composite material particles (30) in long axis direction is 0° or more and less than 45°, is more than 52%.

2. The anode (20) according to claim 1, wherein, of the carbon composite material particles (30) contained in the anode layer (22), a percentage of second carbon composite material particles that an angle θ formed by the surface of the anode collector (21) and a line of the carbon composite material particles (30) in long axis direction is 0° or more and 20° or less, is more than 31%.

3. The anode (20) according to claim 1 or 2, wherein a content of the Si in the carbon composite material (12) is from 1% by mass to 70% by mass.

4. The anode (20) according to any one of claims 1 to 3, wherein the carbon material is a composite comprising a bundle of carbon fibers (11) having pores.

5. The anode (20) according to claim 4, wherein the Si is loaded in the pores.

6. The anode (20) according to any one of claims 1 to 4, wherein the anode layer (22) is disposed in a stripe form on at least one surface of the anode collector (21).
